**Europäisches Patentamt**

(19) **European Patent Office**

**Office européen des brevets**

(11) Veröffentlichungsnummer: **0 104 511**

**B1**

(12) **EUROPÄISCHE PATENTSCHRIFT**

(45) Veröffentlichungstag der Patentschrift:
16.12.87

(51) Int. Cl.⁴: **C 04 B 35/80**, F 16 L 59/04

(21) Anmeldenummer: **83108757.2**

(22) Anmeldetag: **06.09.83**

(54) Thermische Isolierung.

(30) Priorität: **27.09.82 DE 3235708**

(43) Veröffentlichungstag der Anmeldung:
**04.04.84 Patentblatt 84/14**

(45) Bekanntmachung des Hinweises auf die Patenterteilung:
**16.12.87 Patentblatt 87/51**

(84) Benannte Vertragsstaaten:
**BE FR GB IT NL**

(56) Entgegenhaltungen:
EP-A-0 029 227
DE-A-2 524 096
DE-A-2 819 026
DE-A-2 934 677
DE-A-2 940 230
DE-B-1 954 992
US-A-3 199 714
US-A-3 625 896

**Die Akte enthält technische Angaben, die nach dem Eingang der Anmeldung eingereicht wurden und die nicht in dieser Patentschrift enthalten sind.**

(73) Patentinhaber: **BROWN, BOVERI & CIE Aktiengesellschaft, Kallstadter Strasse 1, D-6800 Mannheim 31 (DE)**

(72) Erfinder: **Reis, Harald, Dr. Dipl.- Phys., Im Hirschmorgen 16, D-6906 Leimen (DE)**
Erfinder: **Ziegenbein, Botho, Dr. Dipl.- Phys., Eichendorfstrasse 4, D-6901 Neckarsteinach (DE)**

(74) Vertreter: **Kempe, Wolfgang, Dr., c/o BROWN, BOVERI & CIE AG ZPT Postfach 351, D-6800 Mannheim 31 (DE)**

EP 0 104 511 B1

## Beschreibung

Die Erfindung bezieht sich auf eine thermische Isolierung gemäß dem Oberbegriff des Patentanspruches 1.

Solche thermischen Isolierungen kommen in der Energietechnik zur Anwendung, insbesondere bei Einrichtungen, bei denen Wärmeverluste vermieden werden sollen. Thermische Isolierungen werden unter anderem bei Hochtemperatur-Speicherbatterien auf der Basis von Alkalimetall und Chalkogen verwendet. Die Speicherzellen werden mit thermischen Isolierungen umgeben, um ihre Abkühlung vor allem in den Betriebspausen der Hochtemperatur-Speicherbatterien zu verhindern, damit auch nach den Pausen eine Temperatur von 350°C in den Speicherzellen herrscht, was eine notwendige Voraussetzung für die optimale Funktionsweise der Speicherzellen ist. Ein weiteres Anwendungsgebiet für thermische Isolierungen sind Rohrleitungssysteme innerhalb derer heiße, strömende Medien, Wie z. B. Gase, transportiert werden. Aus der US-PS 3 199 714 ist eine thermische Isolierung bekannt, die einen evakuierten Raum aufweist, in dem das Isoliermaterial angeordnet ist. Dieses wird durch mehrere aufeinandergesetzte Schichten gebildet, die eine definierte Zusammensetzung aufweisen. Jede Schicht enthält ein faserförmiges Material und ein Material mit metallischer Oberfläche. Die beiden Isoliermaterialien sind durch ein anorganisches oder organisches Bindemittel aneinandergefügt und zu den oben erwähnten Schichten geformt.

In der DE-OS 29 34 677 ist ein Verfahren zur Verbesserung des Wärmedämmvermögens von Mineralfaserdämmstoffen beschrieben. Den Mineralfasern werden zur Verbesserung der Isoliereigenschaften infrarotabsorbierende Teilchen in Form von Carbiden, Boriden, Nitriden und Siliziden beigemischt.

Aus der EP-OS 0 029 227 ist ein Wärmedämmformkörper und ein Verfahren zu seiner Herstellung bekannt. Es handelt sich dabei um einen festen mechanisch bearbeitbaren Wärmedämmformkörper aus einer hochdispersen oxidischen Metallverbindung. Für die Herstellung dieses Wärmedämmformkörpers werden hochdisperse Kieselsäuren, ein Trübungsmittel und ein Element, das in stark exothermer Reaktion ein stabiles Oxid bildet, verwendet. Mineralfasern können als Zusatz beigemengt werden.

Aus der DE-OS 28 19 026 ist eine elektrochemische Speicherbatterie mit einer thermischen Isolierung bekannt. Die Isolierung wird durch einen evakuierten Raum gebildet, innerhalb dessen Metallfolien angeordnet sind. Die Metallfolien sind senkrecht zum Temperaturgradienten angeordnet.

Des weiteren ist eine thermische Isolierung für Hochtemperatur-Speicherbatterien bekannt, die aus Glas- oder Mineralwolle aufgebaut ist. Bei dieser Isolierung müssen zur Erzielung einer ausreichenden Wirkung erhebliche Wandstärken vorgesehen werden, damit sich die Hochtemperatur-Speicherbatterien, insbesondere in den Betriebspausen, nicht zu schnell abkühlen, und die Arbeitstemperatur von 350°C lange gehalten werden kann. Da solche dickwandigen Isolierungen die Abmessungen und/oder das Gewicht der Hochtemperatur-Speicherbatterie erheblich vergrößern, ist die Energiespeicherdichte, d.h. die pro Gewichts- oder Volumeneinheit speicherbare Energie, gering.

Ferner wurden verschiedene Pulver- und Faservakuumisolationen für den Kryo- und Hochtemperaturbereich beschrieben (z. B. "Advances in heat transfer", Vol. 9, Edited by Thomas F. Irvine, James P. Hartnett, 1973). Durch Verwendung hinreichend feiner pulver- oder faserförmiger Materialien mit Durchmessern kleiner/gleich 5 Mikron lassen sich selbst bei atmosphärischer Druckbelastung noch sehr kleine Wärmeleitfähigkeiten erzielen.

Die bekannten evakuierten Pulverisolationen verwenden zumeist hochdisperse Pulver, z. B. Siliziumaerogel, mit verschiedenen Beimengungen zur Reduzierung des Strahlungstransportes, z. B. Al oder $Fe_3O_4$. Der Nachteil dieser Pulverisolationen ist, daß bei atmosphärischer Druckbelastung die Festkörperleitfähigkeit über $5 \times 10^{-3}$ W/mK ansteigt. Infolgedessen übersteigt die Gesamtleitfähigkeit in Abhängigkeit von den Temperaturniveaus diesen letztgenannten Wert deutlich. Ein weiterer Nachteil der Pulverisolationen ist, daß eine hinreichend kleine Entgasungsrate, die die Funktionsfähigkeit der Isolation über längere Zeiträume gewährleisten soll, nur mit großem Aufwand verwirklicht werden kann.

Mit den bekannten evakuierten Faserisolationen lassen sich bei atmosphärischer Druckbelastung deutlich niedrigere Festkörperleitfähigkeiten von 1 bis $2 \times 10^{-3}$ W/mK erzielen. Diesen Faserisolationen ist jedoch gemeinsam, daß trotz eines hohen Streuvermögens, z. B. bei einer Temperatur von 300K auf der kalten bzw. 600K auf der heißen Seite, immer noch ca. 50 % des Wärmetransportes durch Strahlung erfolgen.

In der US-Patentschrift 31 99 714 wird zur Erhöhung der Strahlungsextinktion einer Faserisolation die Beimengung von bis zu 45 Gew.-% von strahlungsreflektierenden Al- oder Cu-Flocken, an denen geometrische Reflektionen der Wärmestrahlung auftreten, vorgeschlagen. Die hohe Wärmeleitfähigkeit der metallischen Pulver läßt jedoch erwarten, daß wegen der effektiven Dichten, die sich unter atmosphärischer Druckbelastung bei einer Kompression von kleiner/gleich 10 % einstellen, die Gesamt-Wärmeleitfähigkeit stark anwächst, da die Isolation durch Kontaktbildung zwischen den Flocken überbrückt wird. (Insulation Development for High-temperature Batteries for Electric Vehicle Application (Final report), Union Carbide, Linde Division, DOE contract No. EM-78-C-01-5160, 1979).

Der Erfindung liegt die Aufgabe zugrunde, eine thermische Isolierung für den Hochtemperaturbereich, insbesondere für Temperaturen von 350° C und mehr zu schaffen, die eine sehr geringe Wärmeleitfähigkeit aufweist, druckbelastbar ist und in ihrem Gewicht sowie ihren Abmessungen bzw. ihrem Bauvolumen sehr klein gehalten werden kann.

Diese Aufgabe wird durch die Merkmale des Patentanspruches 1 gelöst.

Weitere erfindungswesentliche Merkmale sind in den Patentansprüchen 2 uns 3 offenbart.

Das faserförmige Isoliermaterial kann dabei z. B. mattenförmig, papierartig oder folienartig ausgebildet sein. Es kann beispielsweise als Keramik- oder Glasfaserpapier, das aus Mikrofasern aufgebaut ist, vorliegen. An den einzelnen Mikrofasern haften die die Wärmestrahlung absorbierenden und/oder streuenden Substanzen. Diese Substanzen sind nicht metallisch und zeichnen sich durch eine niedrige Festkörperleitfähigkeit aus. Sie sind pulver- oder faserförmig und weisen einen Primärteilchendurchmesser auf, der kleiner als 1 µm ist.

Zur Absorption der Wärmestrahlung finden bevorzugt metallische Oxide, Karbide bzw. Nitride Anwendung. Beispielsweise hat sich Magnetit als absorbierende Substanz bewährt. Ferner kann auch das gute Absorptionsvermögen von Kohlenstoff genutzt werden.

Die absorbierenden Substanzen zeichnen sich durch eine sehr geringe Festkörperleitfähigkeit und beliebig kleiner als 1 µm große Teilchendurchmesser aus, wodurch unter anderem das Entstehen von Wärmebrücken ausgeschlossen wird.

Neben der Beimengung von absorbierenden Substanzen wird auch vorgeschlagen, streuende, nicht metallische Beimengungen zur Faserisolation mit aus der Streuungsrechnung (H.C. van der Hulst, "Light scattering by small particels", Dover Puplication Inc. New York, 1975) folgenden optimalen Teilchendurchmessern zur jeweils lokalen Erhöhung der Extinktion im entsprechenden Spektralbereich einzusetzen. Bei Einhaltung eines definierten Teilchendurchmessers kann die Streuung auf einen kleinen Wellenlängenbereich des thermischen Spektrums beschränkt werden (selektive Streuung), während bei einer breiteren Verteilung der Teilchengröße die Streuung weitere Wellenlängenbereiche umfaßt.

In vielen Fällen können die Teilchendurchmesser der streuenden Substanzen so festgelegt werden, daß sie in der Größenordnung der Wellenlänge der eingestrahlten Wärme liegen.

Die Herstellung der erfindungsgemäßen thermischen Isolierung kann in der Weise erfolgen, daß die absorbierenden und/oder streuenden Substanzen der Faserdispersion vor deren Erstarren zum Isoliermaterial als homogen verteilte Pulverpartikel beigemischt sind.

In vorteilhafter Weise kann die thermische Isolierung nicht nur für die Wärmedämmung von Einrichtungen verwendet werden, die eine Temperatur zwischen 300 und 600° C aufweisen, vielmehr besteht die Möglichkeit, die thermische Isolierung auch im Hochtemperaturbereich anzuwenden. Insbesondere kommt die Isolierung z. B. als Wärmedämmung für Rohrleitungsnetze in Frage, die für den Transport von strömenden Medien vorgesehen sind. Insbesondere ist diese thermische Isolierung für Temperaturen von 800° C und mehr ausgelegt. Insbesondere ist sie für die Wärmedämmung von Rohrleitungssystemen gedacht, die sich über mehrere Kilometer erstrecken.

Anhand der Zeichnung, in der zwei Ausführungsbeispiele der Erfindung gezeigt sind, sollen die Erfindung sowie weitere vorteilhafte Ausgestaltungen und Weiterbildungen näher erläutert werden.

Es zeigen:

Fig. 1 eine perspektivische Sicht mehrerer übereinanderliegender Schichten einer erfindungsgemäßen thermischen Isolierung,

Fig. 2 einen Vertikalschnitt durch eine elektrische Batterie mit thermischer Isolierung und

Fig. 3 eine für heiße, strömende Medien vorgesehene Rohrleitung mit der erfindungsgemäßen Isolierung.

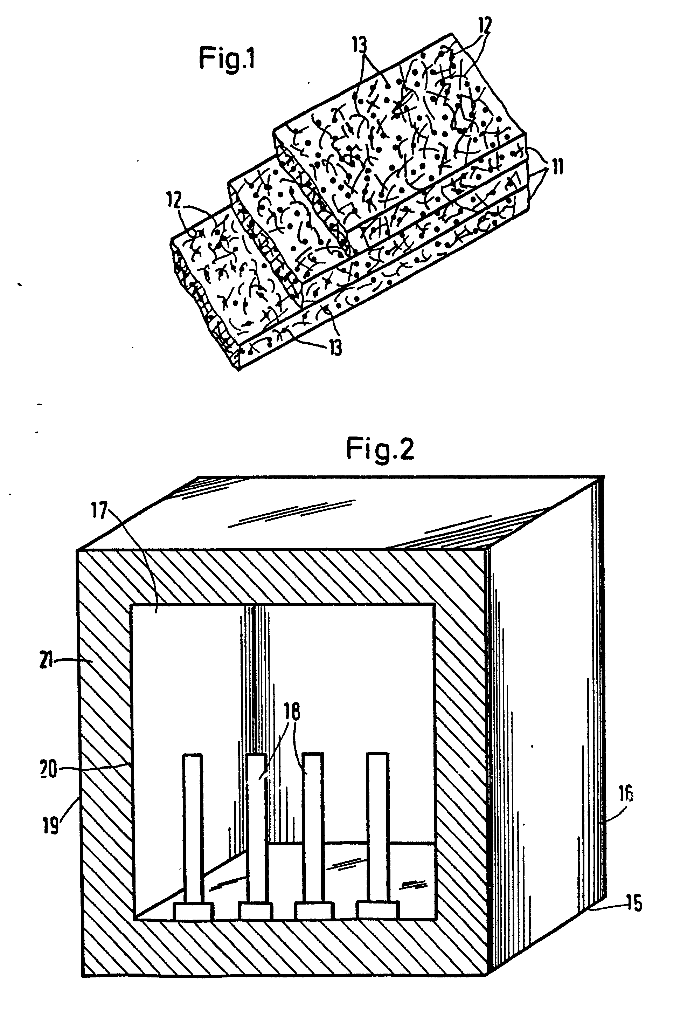

Fig. 1 zeigt in perspektivischer Darstellung einen Ausschnitt aus einer erfindungsgemäßen thermischen Isolierung. Die Isolierung enthält übereinanderliegende Isolierschichten 11, von denen zur Vereinfachung der Darstellung lediglich drei dargestellt wurden. Die Schichten 11 bestehen aus verdichteten miteinander vernetzten Borsilikat-Glasfasern 12, deren Durchmesser kleiner als 1 µm ist. Die Dicke jeder Isolierschicht 11 ist etwa 0,5mm. In den Isolierschichten 11 sind pulverförmige oder faserförmige (nicht dargestellt) Substanzen 13 gleichmäßig feinstverteilt. Es handelt sich hierbei um Wärmestrahlung absorbierende und/oder streuende Substanzen, die an den Borsilikat-Glasfasern 12 angelagert sind. Insbesondere handelt es sich bei einer strahlungsabsorbierenden pulverförmigen Substanz 13 um Magnetit-Pulver, welches mit 5 bis 60 Gew.-% den Glasfasern 12 beigemengt ist. Die Teilchendurchmesser des Pulvers liegen unter 0,5 µm.

Fig. 2 zeigt die thermische Isolierung 15, die von einem doppelwandigen Gehäuse 16 begrenzt ist. Dieses weist einen quaderförmigen Querschnitt auf. Es besitzt einen Innenraum 17, der z. B. für die Aufnahme von Speicherzellen 18 geeignet ist. Die Wände des Gehäuses 16 sind aus Stahl oder Edelstahl gefertigt. Die äußeren und inneren Begrenzungswände 19 und 20 des Gehäuses 16 sind in einem vorgebbaren Abstand parallel zueinander angeordnet. Der Abstand zwischen den inneren und äußeren Begrenzungswänden 19 und 20 richtet sich nach der Dicke der Isolierung 15. Zwischen den äußeren und inneren Begrenzungswänden 19 und 20 des Gehäuses 16 befindet sich ein Hohlraum 21. Die äußeren metallischen Begrenzungswände 19 sind gasdicht miteinander verbunden, insbesondere miteinander verschweißt. Das gleiche gilt für die inneren metallischen Begrenzungswände 20 des Gehäuses. Durch diese Maßnahme wird erreicht, daß der zwischen den Wänden 19 und 20 liegende Hohlraum 21 gasdicht verschließbar ist. Insbesondere kann er dauerhaft evakuiert werden. Bei dem hier gezeigten Ausführungsbeispiel weist der Hohlraum 21 einen Restgasdruck von weniger als 0,5 mbar auf.

Vor dem gasdichten Verschließen und Evakuieren des Hohlraumes 21 wird in diesen das faserförmige Isoliermaterial eingebracht, das bei dem hier gezeigten Ausführungsbeispiel aus etwa 100 Isolierschichten 11 gemäß Figur 1 besteht. Die Schichten 11 sind hintereinander in parallelen Ebenen senkrecht zum Temperaturgradienten angeordnet. Der Hohlraum 21 wird durch das Isoliermaterial vollständig ausgefüllt.

Sind alle erforderlichen Schichten 11 innerhalb des Hohlraumes 21 angeordnet, so werden die äußeren und inneren Begrenzungswände 19 und 20 des Gehäuses 16 gasdicht miteinander verbunden. Anschließend wird der Hohlraum 21 evakuiert. Bei der hier gezeigten thermischen Isolierung 15 sind im Innenraum 17 des Gehäuses 16 die Speicherzellen 18 einer Hochtemperatur-Speicherbatterie auf der Basis von Natrium und Schwefel angeordnet. Die Speicherzellen 18 sind über elektrische Leitungen (hier nicht dargestellt) mit dem Außenbereich verbunden. Für die Durchführung der elektrischen Leitungen (hier nicht dargestellt) sind spezielle Öffnungen (hier nicht dargestellt) innerhalb der thermischen Isolierung 15 vorgesehen.

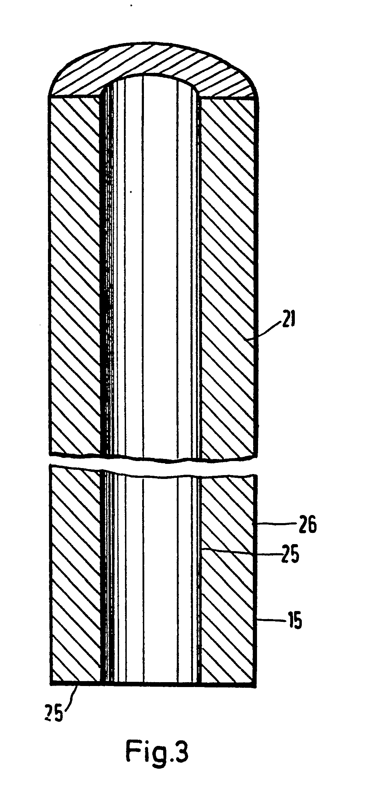

Fig. 3 zeigt eine weitere Ausführungsform der thermischen Isolierung 15. Diese findet bei einem Rohrleitungssystem 24 Anwendung, innerhalb dessen heiße, strömende Medien, wie z. B. Gase transportiert werden. Fig. 3 zeigt nur einen begrenzten Abschnitt dieses Rohrleitungssystems 24 in einem Axialschnitt. Die thermische Isolierung 15 wird auch hier wiederum durch einen gasdicht nach außen verschlossenen Hohlraum 21 gebildet. Die Begrenzung des Hohlraumes 21 erfolgt durch zwei Rohre 25 und 26, die unterschiedliche Durchmesser aufweisen. Insbesondere ist das mit dem kleineren Durchmesser versehene Rohr 25 konzentrisch innerhalb des Rohres 26 angeordnet. Dadurch wird ein gleichmäßiger Zwischenraum zwischen den beiden Rohren 25 und 26 geschaffen, der als Hohlraum 21 für die thermische Isolierung 15 dient. An den Enden dieser beiden Rohre 25 und 26 ist der Hohlraum 21 durch metallische Ringscheiben (hier nicht dargestellt) gasdicht verschlossen. Das Isoliermaterial wird auch hier aus einer Vielzahl übereinanderliegender Isolierschichten 11 gebildet, die konzentrisch um das Rohr 25 gewickelt sind.

Wird ein strömendes Medium durch das Innere des Rohres 25 geleitet, so kommt es zu keiner nennenswerten Druckbelastung der thermischen Isolierung 15. Die Isolierschichten 11 werden hierdurch nicht zusammengedrückt. Eine Druckbelastung der thermischen Isolierung 15 von außen wird durch das Rohr 26 von den Isolierschichten 11 ferngehalten. Der zwischen den beiden Rohren 25 und 26 gebildete Hohlraum 21 wird auch hier evakuiert. Er sollte einen Restgasdruck von höchstens 0,5 mbar aufweisen.

## Patentansprüche

1. Thermische Isolierung (15) mit einem gasdicht verschlossenen, mindestens teilweise evakuierten Hohlraum (21), der ein faserförmiges Isoliermaterial und ein die Wärmestrahlung absorbierendes und/oder die Wärmestrahlung streuendes Material enthält, dadurch gekennzeichnetz daß das die Wärmestrahlung absorbierende und/oder die Wärmestrahlung streuende Material pulverförmiger und/oder faserförmiger Magnetit und/oder Kohlenstoff mit einem Primärteilchendurchmesser von kleiner 1µm ist.

2. Thermische Isolierung nach Anspruch 1, dadurch gekennzeichnet, daß die Abmessungen und/oder die Brechungsindizes der Teilchen der streuenden Substanzen (13) den aus der Streuungsrechnung unter Berücksichtigung der spektralen Bereiche der Wärmestrahlung ermittelten optimalen Werten entsprechen.

3. Thermische Isolierung nach einem der Ansprüche 1 oder 2, dadurch gekennzeichnet, daß die absorbierenden und/oder streuenden Substanzen (13) bereits der zur Herstellung des faserförmigen Isoliermaterials verwendeten Faserdispersion als homogene Verteilepartikel beigemischt sind.

## Claims

1. Thermal insulation (15) with a gastight-closed, at least partially evacuated cavity (21), which contains a fibrous insulating material and a material absorbing the thermal radiation and/or dispersing the thermal radiation, characterized in that the material absorbing the thermal radiation and/or dispersing the thermal radiation is pulverulent and/or fibrous magnetite and/or carbon having a primary particle diameter of less than 1 µm.

2. Thermal insulation according to Claim 1, characterized in that the dimensions and/or the refractive indices of the particles of the dispersing substances (13) correspond to the optimum values determined from dispersion calculation taking into account the spectral ranges of the thermal radiation.

3. Thermal insulation according to one of Claims 1 or 2, characterized in that the absorbing and/or dispersing substances (13) are already mixed in as homogeneously distributed particles with the fibre dispersion used for the production of the fibrous insulating material.

## Revendications

1. Isolation thermique (15) comprenant une chambre creuse fermée (21), étanche aux gaz, dans laquelle on a fait un vide au moins partiel et qui contient une matière isolante fibreuse et une matière absorbant le rayonnement de chaleur et/ou dispersant le rayonnement de chaleur, caractérisée en ce que la matière absorbant le rayonnement de chaleur et/ou dispersant le rayonnement de chaleur est de la magnétite et/ou du carbone, à l'état de poudre et/ou de fibres, avec un diamètre de particules primaires inférieur à 1 µm.

2. Isolation thermique selon la revendication 1, caractérisée en ce que les dimensions et/ou les indices de réfraction des particules des substances dispersantes (13) correspondent aux valeurs optimales déterminées à partir du calcul de la dispersion, en tenant compte des régions spectrales du rayonnement de chaleur.

3. Isolation thermique selon l'une des revendications 1 ou 2, caractérisée en ce que les substances absorbantes et/ou dispersantes (13) sont déjà mélangées, à l'état de particules en répartition homogène, à la dispersion de fibres utilisée pour la préparation de la matière isolante fibreuse.

0 104 511

Fig.1

Fig.2

1

Fig.3